# EUROPÄISCHE PATENTSCHRIFT

(11) **EP 0 776 344 B1**
(45) Veröffentlichungstag und Bekanntmachung des Hinweises auf die Patenterteilung: **07.04.1999**
(21) Anmeldenummer: 95929060.2
(22) Anmeldetag: 02.08.1995
(51) Int. Cl.: C08J 9/02, C08G 75/14, C08L 81/04

(54) **POLYARYLENSULFID-SCHÄUME UND VERFAHREN ZU DEREN HERSTELLUNG**
POLYARYLENE SULPHIDE FOAMS AND PROCESS FOR PRODUCING THE SAME
MOUSSES EN SULFURE DE POLYARYLENE ET LEUR PROCEDE DE PRODUCTION

(30) Priorität: 15.08.1994 DE 4428737
(43) Veröffentlichungstag der Anmeldung: 04.06.1997
(73) Patentinhaber: Ticona GmbH, 65451 Kelsterbach (DE)
(72) Erfinder: FRANK, Georg, D-72074 Tübingen (DE); KULPE, Jürgen, D-46539 Dinslaken (DE); SCHLEICHER, Andreas, D-65614 Beselich (DE); SCHECKENBACH, Helmut, D-63225 Langen (DE)
(86) Internationale Anmeldenummer: EP9503080
(87) Internationale Veröffentlichungsnummer: WO9605246

(56) Entgegenhaltungen:
- US-A- 3 998 767

## Beschreibung

Die Erfindung betrifft Polyarylensulfid-Schäume und ein Verfahren zu deren Herstellung durch Erhitzen von Polyarylensulfiden, die Sulfoxid-Gruppen oder ein Polyarylensulfoxid enthalten.

Polyphenylensulfidschäume werden bisher aus Polyphenylensulfid (abgekürzt PPS) durch Zusatz von 3 bis 5 Gew.-% eines Treibmittelkonzentrates hergestellt (EP-A-0 406 634 oder US-A-5,114,983). Als Treibmittel dienen Azoverbindungen, Anhydride oder Azole. Die Mischung wird bei für Polyarylensulfide üblichen Temperaturen von 300 bis 360 °C verarbeitet und verschäumt. Bei dem so geschäumten Polyphenylensulfid läßt sich eine Dichtereduktion von etwa 40 bis 45 % erreichen, wobei der Begriff "Dichtereduktion" als eine prozentuale Verringerung der Dichte des geschäumten Materials, bezogen auf die Dichte des ungeschäumten Ausgangsmaterials, verstanden wird.

Schaumstoffplatten mit hoher Wärmeformbeständigkeit können aus einem Gemisch von 80 bis 99% Styrolpolymerisat und 1 bis 20 Gew.-% 1,4-Polyphenylensulfid und üblichen Treibzusätzen, wie Propan, Butan, Pentan, Chlorkohlenwasserstoffen, Fluorchlorkohlenwasserstoffen oder CO₂ durch Extrusion bei 100 bis 200 °C hergestellt werden (EP-A-0 443 393; US-A-5,106,684). Diese Schaumstoffplatten weisen Wärmeleitzahlen zwischen 0,024 und 0,030 Watt·Meter⁻¹ Kelvin⁻¹ auf und enthalten zu 90 bis 95 % geschlossene Zellen mit einem Zelldurchmesser von 0,1 bis 0,2 mm.

Formmassen aus Polyarylensulfid wird gelegentlich 0,05 bis 10 Gew.-% Hexamethoxymethylmelamin zugegeben, um die Verarbeitbarkeit zu verbessern (US-PS-3,998,767). Erwärmt man diese Formmassen nach Zugabe des Hexamethoxymethylmelamins auf Temperaturen von 254 bis 316 °C, so erhält man ein vernetztes Produkt. Erhitzt man diese Formmassen jedoch kurzzeitig auf 318 bis 371 °C, so erhält man ein geschäumtes Produkt.

Gering geschäumtes Polyphenylensulfid (US-A-4,471,247), das als elektrisches Isolier- oder Wärmeabführungsmedium für Spulen und Polschuhe in Eisenbahnelektromotoren verwendet werden kann, kann durch Erhitzen von PPS-Material erhalten werden, das flüchtige Verunreinigungen enthält. Die Dichte des thermisch behandelten Materials liegt zwischen 5 und 10 % unter der Dichte des Ausgangsmaterials. Diese Dichtereduktion ist für viele Anwendungen, z.B. als Wärmedämm-Material, zu gering. Für eine stärkere Aufschäumung des Materials muß auch hier ein Treibmittel zugesetzt werden.

Die Verschäumung hoch schmelzender Polymere ohne die üblichen Treibmittel oder Treibgase ist mit einem Dichtereduktionsgrad von mehr als 10 % entweder nicht möglich oder bereitet Schwierigkeiten.

Aufgabe der Erfindung war die Entwicklung eines Verfahrens zur Herstellung von Polyarylensulfid-Schäumen, das nicht den Zusatz üblicher Treibmittel zu dem zu verschäumenden Polymer erfordert und das trotzdem eine starke Aufschäumung ermöglicht.

Es wurde gefunden, daß Polyarylensulfoxide und deren Mischungen mit Polyarylensulfiden bei Erhitzen einen Schaum bilden. Beim Erhitzen gehen Sulfoxid-Gruppen der Polyarylensulfoxide in Sulfidgruppen über und es wird dabei Sauerstoff freigesetzt, der als Blähmittel wirkt.

Die Erfindung betrifft somit ein Verfahren zur Herstellung von Polyarylensulfid-Schaum, dadurch gekennzeichnet, daß mindestens ein Polyarylensulfoxid oder ein Gemisch aus einem oder mehreren Polyarylensulfiden und mindestens einem Polyarylensulfoxid erhitzt werden.

Unter Polyarylensulfiden, die auch Polyarylenthioether genannt werden, werden Verbindungen verstanden, die mindestens eine Arylensulfid-Einheit (-Ar-S-; Ar = Arylen) enthalten. Arylene sind beispielsweise Phenylen, Biphenylen (-C₆H₄-C₆H₄-), Naphthalen, Anthracen oder Phenanthren, die ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, isopropyl, n-Butyl, t-Butyl oder n-Hexyl, oder C₆-C₁₄-Arylreste, z.B. Phenyl oder Naphtyl; Halogene, Sulfonsäure-, Amino-, Nitro-, Cyano-, Hydroxy-, oder Carboxylgruppen.

Polyarylensulfide sind beispielsweise Verbindungen, die Einheiten der Formel

[(Ar¹)ₙ-X)]ₘ-[(Ar²)ᵢ-Y]ⱼ-[(Ar³)ₖ-Z]-[(Ar⁴)ₒ-W)]ₚ- (I)

enthalten, wobei Ar¹, Ar², Ar³, Ar⁴, W, X, Y und Z unabhängig voneinander gleich oder verschieden sind. Die Indizes n, m, i, j, k, o und p sind unabhängig voneinander Null oder ganze Zahlen 1, 2, 3 oder 4, wobei ihre Summe mindestens 2 ergeben muß, Ar¹, Ar², Ar³, Ar⁴ stehen in der Formel (I) für Arylensysteme mit 6 bis 18 C-Atomen, z.B. Phenylen, Biphenylen (-C₆H₄-C₆H₄-), Naphthalen, Anthracen oder Phenanthren, die ein- oder mehrfach substituiert sein können. W, X, Y und Z stellen zweiwertige Verknüpfungsgruppen dar, ausgewählt aus -SO₂-, -S-, -SO-,-CO-, -O-, -CO₂-, Alkylen- oder Alkylidengruppen mit 1 bis 6, vorzugsweise 1 bis 4 C-Atomen. Die Arylgruppen Ar¹, Ar², Ar³, Ar⁴ der Formel (I) können gegebenenfalls unabhängig voneinander ein oder mehrere funktionelle Gruppen, z.B. geradkettige oder verzweigte Alkylreste wie Methyl, Ethyl, n-Propyl, iso-Propyl, n-Butyl, t-Butyl; Halogene, Sulfonsäure-, Amino-, Nitro-, Cyano-, Hydroxy-, oder Carboxylgruppen enthalten. Ferner sind auch Blockcopolymere aus Einheiten der Formel (I) einsetzbar.

Unter Polyarylensulfoxide werden Polymere verstanden, die wenigstens eine Arylensulfoxid-Einheit (-Ar-SO- ; Ar = Arylen) enthalten. Arylene sind beispielsweise Phenylen, Biphenylen (-C₆H₄-C₆H₄-), Naphthalen, Anthracen oder Phenanthren, die ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, iso-Propyl, n-Butyl, t-Butyl oder n-Hexyl, oder C₆-C₁₄-Arylreste, z.B. Phenyl oder Naphtyl; Halogene, Sulfonsäure-, Amino-, Nitro-, Cyano-, Hydroxy-, oder Carboxylgruppen.

Die Begriffe "Polyarylensulfide" und "Polyarylensulfoxide" können sich überschneiden. Polyarylensulfide mit Einheiten der Formel (I) können auch Sulfoxid-Gruppen enthalten. Diese Polyarylensulfide können dann auch als Polyarylensulfoxide betrachtet werden. Demgemäß gibt Formel (I) auch Beispiele für Polyarylensulfoxide, wenn unter den Verknüpfungsgruppen W,X,Y und Z wenigstens eine Sulfoxid-Gruppe (-SO-) enthalten ist. Zur Erzielung eines Schäumungseffektes sollte bei Polyarylensulfoxiden mit Einheiten der Formel (I) mindestens 0,1%, vorteilhafter 1% bis 100% und insbesondere 5% bis 100% der Summe der Verknüpfungsgruppen W, X, Y und Z in Formel (I) aus -SO- - Verknüpfungsgruppen bestehen.

Polyarylensulfoxide, die aus wiederkehrenden Einheiten der Formel (I) bestehen, lassen sich beispielsweise aus Polyarylenthioethern oder sulfongruppenhaltigen Polyarylenthioethern durch Oxidation (z.B. mit Ozon) gewinnen.

Polyarylenthioether, insbesondere Polyphenylensulfid, lassen sich auf Grundlage der Reaktion von dihalogenierten Aromaten mit Natriumsulfid nach EDMONDS und HILL herstellen. Polyarylenthioether und deren Herstellung sind in "Ullmann's Encyclopedia of Industrial Chemistry, Volume A21, B. Elvers, S. Hawkins und G. Schulz (Eds.), VCH, Weinheim-New York 1992, S. 463-472) beschrieben, worauf Bezug genommen wird. Polyphenylensulfid, das zur Herstellung eines Polyarylensulfoxids bevorzugt verwendet wird, besteht im allgemeinen aus 1,4-verknüpften Phenylensulfid-Einheiten (-[-C₆H₄-S-]-), die bis zu einem Anteil von 30 Mol-Prozent eine 1,2- und/oder 1,3-Verknüpfung am aromatischen Kern aufweisen können. Das Polyphenylensulfid kann aus linearen oder vernetzten Polymerketten bestehend.

Die Synthese von sulfongruppenhaltigen Polyarylenthioethern ist in Chimia 28(9), (1974) 567 beschrieben.

Die Oxidation der Polyarylensulfide kann so durchgeführt werden, daß nur ein Teil der Sulfidbrücken in Sulfoxidgruppen überführt werden (unvollständige Oxidation z.B. durch Einsatz unterstöchiometrischer Mengen Oxidationsmittel). Solche Oxidationsprodukte werden unter dem Begriff Polyarylensulfoxide mit umfaßt. Die Oxidationsbedingungen können auch so angepaßt werden (Temperatur, Ozonkonzentration), daß neben Sulfoxid- auch Sulfonbrücken gebildet werden.

Die Herstellung von Polyarylensulfoxiden kann z.B. durch Oxidation mit Ozon, wie in der am 4. Mai 1993 eingereichten deutschen Patentanmeldung Nr. P 43 14 736.4 mit dem Titel "Oxidation von Polyarylensulfiden" beschrieben und worauf Bezug genommen wird, erfolgen.

Der erzielbare Schäumungseffekt ist abhängig von der Art des Polyarylensulfoxids (Menge der Sulfoxidgruppen in dem Polyarylensulfoxid) und dem Anteil des Polyarylensulfoxids in dem zu verschäumenden Polymer oder der Polymermischung. Beispielsweise gelingt es bei Erhitzen von Polyphenylensulfoxid einen Schaum mit einer gegenüber dem Ausgangsmaterial um über 50% verringerten Dichte herzustellen.

Bei dem Erhitzen gemäß dem erfindungsgemäßen Verfahren gehen Sulfoxid-Gruppen im Polymer oder in der Polymermischung in Sulfid-Gruppen über.

Das Erhitzen der Ausgangspolymere oder der Polymermischung kann in einem Temperaturbereich von 250 bis 400°C erfolgen. Gewöhnlich liegt die Temperatur im Bereich von 300 bis 360° C.

Für die Erfindung sind im allgemeinen Polyarylensulfoxide geeignet, die eine mittlere Molmasse M_{w} von 4000 bis 200000, vorzugsweise 10000 bis 150000, insbesondere 25000 bis 100000 aufweisen.

Gemäß der Erfindung können auch Mischungen verschiedener Polyarylenthioether als Polyarylensulfid-System oder Mischungen verschiedener Polyarylensulfoxide eingesetzt werden.

Die Herstellung eines Polyarylensulfid-Schaumes muß nicht von einer Mischung eines Polyarylensulfids mit einem Polyarylensulfoxid ausgehen, sie kann auch nur von einem Polyarylensulfoxid ausgehen. So kann geschäumtes Polyphenylensulfid durch Erhitzen eines entsprechenden Polyphenylensulfoxids erhalten werden.

Die Polymermischungen oder das Polyarylensulfoxid können z.B. als Pulver, Preßlinge, Fasern, Folien oder Formkörper zur Herstellung des Schaumes eingesetzt werden. Die Pulver besitzen dabei z.B. handelsübliche Teilchengrößen, wobei auch Granulate verwendbar sind. Werden die Polymere als Fasern verwendet, werden diese als Stapelfasern, Mikrofasern, Nadelfilz, "non woven" Material, Kardenband oder Gewebe eingesetzt. Auch Folien oder Folienschnipsel können in geeigneter Form Verwendung finden.

Die Polyarylensulfoxide sollten, um einen gleichmäßigen Schaum zu erzielen, in Pulverform verwendet werden. Die mittlere Teilchengröße (D₅₀-Wert) liegt im Bereich von 0,3 x 10⁻⁶ bis 500 x 10⁻⁶ m, vorzugsweise von 0,5 x 10⁻⁶ bis 300 x 10⁻⁶ m, besonders bevorzugt von 0,5 x 10⁻⁶ bis 200 x 10⁻⁶ m.

Die Ausgangspolymere, das heißt Polyarylensulfide oder Polyarylensulfoxide, können im allgemeinen als unverschnittenes Material eingesetzt werden. Möglich ist aber auch der Zusatz von üblichen Füllstoffen, z.B. Kreide, Talkum, Ton, Glimmer, und/oder faserförmige Verstärkungsmittel, wie Glas- und Kohlenstoffasern, Whisker, sowie weitere übliche Zusatzstoffe und Verarbeitungshilfsmittel, z.B. Gleitmittel, Trennmittel, Antioxidantien, UV-Stabilisatoren.

Ein weiterer Gegenstand der Erfindung sind geschäumte Polyarylensulfide mit einer um mindestens 50 Prozent gegenüber dem ungeschäumten Material verringerten Dichte.

Die geschäumten Polyarylensulfide können eine um 55 bis 65 % verringerte Dichte aufweisen. Schäume mit einer Dichtereduktion größer als 65 % sind herstellbar.

Die geschäumten Polyarylensulfide können nach dem Verfahren gemäß der Erfindung hergestellt werden.

Der gebildete Schaum kann offenporig sein.

Formteile können aus Polyarylensulfid-Schaum hergestellt werden. Die Formteile können als hochbeanspruchbare Funktionsbauteile, beispielsweise im Flugzeug- und Automobilbau, verwendet werden. Weitere Verwendungen der Formteile bieten sich im chemischen Apparatebau an. Die Schäume oder Formteile können als chemikalien- oder wärmebeständige Isolationsmaterialien dienen.

Vorteile des erfindungsgemäßen Verfahrens zur Herstellung schaumförmiger Polymerstrukturen sind darin zu sehen, daß
- kein Zusatz von niedermolekularen Treibmitteln notwendig ist,
- das Verfahren einfach durchführbar ist,
- keine Verwendung umweltschädlicher Treibgase notwendig ist,
- Polyarylensulfid-Schäume mit besonders geringer Dichte möglich sind,
- und daß ein breiter Bereich des Schäumungsgrades und der Porengröße einstellbar ist.

Die Erfindung soll nachfolgend durch die Ausführungsbeispiele für den Fachmann noch näher erläutert werden, ohne aber auf die konkret dargestellten Ausführungsformen beschränkt zu sein.

### Beispiele:

### 1.) Herstellung von Polyphenylensulfoxid

In einem Reaktionsgefäß mit Scheibenrührer wurden 54,1 g eines Polyphenylensulfid-Pulvers (mittleres Molekulargewicht: 40000) mit einem mittleren Partikeldurchmesser von 20 x 10⁻⁶ m, in 400 ml Wasser suspendiert. In die Suspension wurde bei Temperaturen von minus 5 bis minus 7° C Ozon-haltiges Gas eingeleitet bis 0,5 Mol Ozon aufgenommen waren (72 Minuten). Die Ozonkonzentration betrug während der Begasung 51 bis 115 g pro Kubikmeter Gas. Nach der Reaktion wurde das Polymerpulver abfiltriert und getrocknet. Die Elementaranalyse des Produktes ergab ein Schwefel/Sauerstoff-Verhältnis von 1:1.

### 2.) Herstellung eines Schaumes aus Polyphenylensulfoxid

Eine Petri-Schale mit Durchmesser 10 cm wurde ca. 0,5 cm hoch mit Polyphenylensulfoxid gefüllt und in einem geschlossenen Ofen an Luft mit einer Heizrate von 10 K/min auf eine Temperatur von 320 °C geheizt. Dabei bildete sich nach Erreichen der Endtemperatur ein, offenporiger Schaum, dessen Dichte bei 0,5 g / cm³ lag. Eine anschließende ESCA-Analyse zeigte, daß die Sulfoxidverknüpfungsgruppen vollständig reduziert waren.

### 3.) Herstellung eines Schaumes aus Polyphenylensulfid/Polyphenylensulfoxid

Eine Mischung von 75 Gew.-% Polyphenylensulfid und 25 Gew.-% Polyphenylensulfoxid wurde in eine Preßform (Ring mit Innendurchmesser von 120 mm und Vollzylinder mit Durchmesser von 120 mm) gegeben und unter einer Presse (Polystat 2005, Fa. Schwabenthan, Berlin, Bundesrepublik Deutschland) bei einem Druck von 10 bar auf 320 °C aufgeheizt. Bei dieser Temperatur wurde der Druck 20 Minuten gehalten, anschließend wurde unter Druck auf ca. 50 °C abgekühlt und entformt. Der Preßling hatte die Form einer runden Platte mit 120 mm Durchmesser und 1,9 mm Dicke. Die gepreßte Platte bestand aus einem offenporigen Schaum mit geschlossener Oberfläche. Die Dichte betrug 0,69 g / cm³.

## Patentansprüche

1. Verfahren zur Herstellung von Polyarylensulfid-Schaum, dadurch gekennzeichnet, daß mindestens ein Polyarylensulfoxid oder ein Gemisch aus einem oder mehreren Polyarylensulfiden und mindestens einem Polyarylensulfoxid bei einer Temperatur im Bereich von 250 bis 400°C erhitzt werden, wobei unter Polyarylensulfid Verbindungen verstanden werden, die mindestens eine Arylensulfid-Einheit (-Ar-S-; Ar = Arylen) enthalten, und unter Polyarylensulfoxid Verbindungen, die mindestens eine Arylensulfoxid-Einheit (-Ar-SO-) enthalten, und wobei das mittlere Molekulargewicht M_{w} des Polyarylensulfoxides 4 000 bis 200 000 beträgt.

2. Verfahren nach Anspruch 1, dadurch gekennzeichnet, daß das Polyarylensulfoxid Einheiten der Formel -(-C₆H₄-SO-)- enthält.

3. Verfahren nach Anspruch 1, dadurch gekennzeichnet, daß als Arylen (Ar) im Polyarylensulfid und im Polyarylensulfoxid unabhängig voneinander Phenylen, Biphenylen, Naphthalen, Anthracen und/oder Phenanthren eingesetzt wird.

4. Verfahren nach Anspruch 1, dadurch gekennzeichnet, daß Polyphenylensulfoxid oder Polymermischungen aus einem Polyphenylensulfoxid und Polyphenylensulfid eingesetzt werden.

5. Verfahren nach Anspruch 1, dadurch gekennzeichnet, daß bei einer Temperatur im Bereich von 280 bis 360 °C erhitzt wird.

6. Verfahren nach Anspruch 1, dadurch gekennzeichnet, daß die Herstellung des Polyarylensulfid-Schaumes ohne Zusatz eines Blähmittels erfolgt.

7. Verfahren nach Anspruch 1, dadurch gekennzeichnet, daß das Gemisch 1 bis 99,9 Gewichtsprozent mindestens eines Polyarylensulfoxides enthält.

8. Verfahren nach Anspruch 1, dadurch gekennzeichnet, daß das Gemisch 5 bis 99,9 Gewichtsprozent mindestens eines Polyarylensulfoxides enthält.

9. Verfahren nach Anspruch 1, dadurch gekennzeichnet, daß das Gemisch 10 bis 99,9 Gewichtsprozent mindestens eines Polyarylensulfoxides enthält.

10. Geschäumtes Polyarylensulfid, erhältlich durch Erhitzen von mindestens einem Polyarylensulfoxid oder einem Gemisch aus einem oder mehreren Polyarylensulfiden und mindestens einem Polyarylensulfoxid bei einer Temperatur im Bereich von 250 bis 400°C, wobei unter Polyarylensulfid Verbindungen verstanden werden, die mindestens eine Arylensulfid-Einheit (-Ar-S-; Ar = Arylen) enthalten, und unter Polyarylensulfoxid Verbindungen, die mindestens eine Arylensulfoxid-Einheit (-Ar-SO-) enthalten, und wobei das mittlere Molekulargewicht M_{w} des Polyarylensulfoxides 4 000 bis 200 000 beträgt.

11. Geschäumtes Polyarylensulfid nach Anspruch 10, dadurch gekennzeichnet, daß der Schaum offenporig ist.

12. Verwendung von geschäumtem Polyarylensulfid nach den Ansprüchen 10 oder 11 zur Herstellung von Formteilen.

13. Verwendung von Polyarylensulfoxid oder Polyarylensulfoxid/Polyarylensulfid-Gemischen zur Herstellung von geschäumten Formteilen, wobei unter Polyarylensulfid Verbindungen verstanden werden, die mindestens eine Arylensulfid-Einheit (-Ar-S-; Ar = Arylen) enthalten, und unter Polyarylensulfoxid Verbindungen, die mindestens eine Arylensulfoxid-Einheit (-Ar-SO-) enthalten, und wobei das mittlere Molekulargewicht M_{w} des Polyarylensulfoxides 4 000 bis 200 000 beträgt.

## Claims

1. A process for the production of a polyarylene sulfide foam, which comprises heating at least one polyarylene sulfoxide or a mixture of one or more polyarylene sulfides and at least one polyarylene sulfoxide at a temperature in the range from 250 to 400°C, polyarylene sulfide being understood as meaning compounds which contain at least one arylene sulfide unit (-Ar-S-; Ar = arylene), and polyarylene sulfoxide being understood as meaning compounds which contain at least one arylene sulfoxide unit (-Ar-SO-), and the average molecular weight M_{w} of the polyarylene sulfoxide being 4000 to 200,000.

2. The process as claimed in claim 1, wherein the polyarylene sulfoxide contains units of the formula -(-C₆H₄-SO-)-.

3. The process as claimed in claim 1, wherein the arylene (Ar) employed in the polyarylene sulfide and in the polyarylene sulfoxide is, independently of one another, phenylene, biphenylene, naphthylene, anthracene and/or phenanthrene.

4. The process as claimed in claim 1, wherein polyphenylene sulfoxide or a polymer mixture of a polyphenylene sulfoxide and polyphenylene sulfide is employed.

5. The process as claimed in claim 1, wherein heating is carried out at a temperature in the range from 280 to 360°C.

6. The process as claimed in claim 1, wherein the polyarylene sulfide foam is produced without addition of an expanding agent.

7. The process as claimed in claim 1, wherein the mixture comprises 1 to 99.9 percent by weight of at least one polyarylene sulfoxide.

8. The process as claimed in claim 1, wherein the mixture comprises 5 to 99.9 percent by weight of at least one polyarylene sulfoxide.

9. The process as claimed in claim 1, wherein the mixture comprises 10 to 99.9 percent by weight of at least one polyarylene sulfoxide.

10. A foamed polyarylene sulfide, obtainable by heating at least one polyarylene sulfoxide or a mixture of one or more polyarylene sulfides and at least one polyarylene sulfoxide at a temperature in the range from 250 to 400°C, polyarylene sulfide being understood as meaning compounds which contain at least one arylene sulfide unit (-Ar-S-; Ar = arylene), and polyarylene sulfoxide being understood as meaning compounds which contain at least one arylene sulfoxide unit (-Ar-SO-), and the average molecular weight M_{w} of the polyarylene sulfoxide being 4000 to 200,000.

11. A foamed polyarylene sulfide as claimed in claim 10, wherein the foam is open-pored.

12. The use of a foamed polyarylene sulfide as claimed in claim 10 or 11 for the production of moldings.

13. The use of a polyarylene sulfoxide or polyarylene sulfoxide/polyarylene sulfide mixture for the production of foamed moldings, polyarylene sulfide being understood as meaning compounds which contain at least one arylene sulfide unit (-Ar-S-; Ar = arylene), and polyarylene sulfoxide being understood as meaning compounds which contain at least one arylene sulfoxide unit (-Ar-SO-), and the average molecular weight M_{w} of the polyarylene sulfoxide being 4000 to 200,000.

## Revendications

1. Procédé de préparation de mousse de poly(sulfure d'arylène), caractérisé en ce que l'on chauffe au moins un poly(sulfoxyde d'arylène) ou un mélange d'un ou de plusieurs poly(sulfures d'arylène) et d'au moins un poly(sulfoxyde d'arylène) à une température comprise dans l'intervalle de 250 à 400°C, le poly(sulfure d'arylène) étant entendu comme des composés qui contiennent au moins une unité sulfure d'arylène (-Ar-S-; Ar = arylène), et le poly(sulfoxyde d'arylène) étant entendu comme des composés qui contiennent au moins une unité sulfoxyde d'arylène (-Ar-SO-), et le poids moléculaire moyen M_{w} du poly(sulfoxyde d'arylène) valant 4000 à 200 000.

2. Procédé suivant la revendication 1, caractérisé en ce que le poly(sulfoxyde d'arylène) contient des unités de formule -(-C₆H₄-SO-)-.

3. Procédé suivant la revendication 1, caractérisé en ce que les arylènes (Ar) utilisés dans le poly(sulfure d'arylène) et dans le poly(sulfoxyde d'arylène) sont indépendamment l'un de l'autre un phénylène, un biphénylène, un naphtalène, un anthracène et/ou un phénanthrène.

4. Procédé suivant la revendication 1, caractérisé en ce que l'on utilise un poly(sulfoxyde de phénylène) ou des mélanges polymères de poly(sulfoxyde de phénylène) et de poly(sulfure de phénylène).

5. Procédé suivant la revendication 1, caractérisé en ce que l'on chauffe à une température comprise dans l'intervalle de 280 à 360°C.

6. Procédé suivant la revendication 1, caractérisé en ce que la préparation de la mousse de poly(sulfure d'arylène) est réalisée sans addition d'un agent d'expansion.

7. Procédé suivant la revendication 1, caractérisé en ce que le mélange contient 1 à 99,9% en poids d'au moins un poly(sulfoxyde d'arylène).

8. Procédé suivant la revendication 1, caractérisé en ce que le mélange contient 5 à 99,9% en poids d'au moins un poly(sulfoxyde d'arylène).

9. Procédé suivant la revendication 1, caractérisé en ce que le mélange contient 10 à 99,9% en poids d'au moins un poly(sulfoxyde d'arylène).

10. Poly(sulfure d'arylène) moussé pouvant être obtenue par chauffage d'au moins un poly(sulfoxyde d'arylène) ou d'un mélange d'un ou plusieurs poly(sulfures d'arylène) et d'au moins un poly(sulfoxyde d'arylène) à une température comprise dans l'intervalle de 250 à 400°C, le poly(sulfure d'arylène) étant entendu comme des composés qui contiennent au moins une unité sulfure d'arylène (-Ar-S-; Ar = arylène), et le poly(sulfoxyde d'arylène) étant entendu comme des composés qui contiennent au moins une unité sulfoxyde d'arylène (-Ar-SO-), et le poids moléculaire moyen M_{w} du poly(sulfoxyde d'arylène) valant 4000 à 200 000.

11. Poly(sulfure d'arylène) moussé suivant la revendication 10, caractérisé en ce que la mousse est à pores ouverts.

12. Utilisation de poly(sulfure d'arylène) moussé suivant la revendication 10 ou 11 pour la fabrication de pièces moulées.

13. Utilisation de poly(sulfoxyde d'arylène) ou de mélanges poly(sulfoxyde d'arylène)/poly(sulfure d'arylène) pour la préparation de pièces moulées en mousse, le poly(sulfure d'arylène) étant entendu comme des composés qui contiennent au moins une unité sulfure d'arylène (-Ar-S-; Ar = arylène), et le poly(sulfoxyde d'arylène) étant entendu comme des composés qui contiennent au moins une unité sulfoxyde d'arylène (-Ar-SO-), et le poids moléculaire moyen M_{w} du poly(sulfoxyde d'arylène) valant 4000 à 200 000.
